# EUROPEAN PATENT SPECIFICATION

(11) **EP 4 253 173 B1**
(45) Date of publication and mention of the grant of the patent: **12.02.2025**
(21) Application number: 23163265.4
(22) Date of filing: 21.03.2023
(51) Int. Cl.: B60T 8/17, B60T 8/24, B60W 30/02, B62D 53/08

(54) **TRACTOR-TRAILER AND METHOD FOR CONTROLLING THE SPEED OF ADVANCE OF THE TRACTOR-TRAILER**
SATTELSCHLEPPER UND VERFAHREN ZUR STEUERUNG DER VORTRIEBSGESCHWINDIGKEIT DES SATTELSCHLEPPERS
TRACTEUR-REMORQUE ET PROCÉDÉ DE COMMANDE DE LA VITESSE D'AVANCEMENT DU TRACTEUR-REMORQUE

(30) Priority: 30.03.2022 IT 202200006293
(43) Date of publication of application: 04.10.2023
(73) Proprietor: Toyota Material Handling Manufacturing Italy S.p.A, 40132 Bologna (IT)
(72) Inventor: MASTROIANNI, Francesco, 55100 LUCCA (IT); NOCCO, Igino, BUCINASO (MILANO) (IT); PESSO, Tommaso, POGGIO RENATICO (FERRARA) (IT)
(74) Representative: Casadei, Barbara

(56) References cited:
- EP-A1- 1 961 635
- EP-A1- 3 533 673
- WO-A1-2007/008150
- DE-A1- 102009 011 907
- DE-A1- 102014 100 069
- DE-A1- 4 310 764
- US-B1- 10 427 732

## Description

This invention relates to a tractor-trailer and to a method for controlling the speed of advance of the tractor-trailer.

The tractor-trailer is a towing vehicle for heavy loads in the order of 70 tonnes, for example.

Amongst the possible causes of accidents of the tractor-trailer there is the so-called "jackknife" phenomenon, that is to say, a relative "scissor-like" rotation between a tractor unit and a semitrailer due to excessive inertia of the semitrailer which discharges its kinetic energy against the tractor unit causing the loss of trajectory and consequent ungovernability.

The "jackknifing" can be triggered in a variety of situations, such as, for example, sharp braking along a bend, braking along a bend performed on a slope and/or in low adherence conditions due, for example, to wet or icy asphalt.

This phenomenon could be even more significant when the vehicle is being driven autonomously, in particular in the emergency safety braking condition defined by an Obstacle Detection algorithm.

For example, patent document DE4310764 describes a control system which prevents oscillation of the trailer relative to the tractor-trailer.

In this context, the need has been felt of implementing a tractor-trailer equipped with a redundant control system aimed at eliminating the triggering of instability phenomena, in particular attributable to the "jackknifing", as described in independent claim1, and controlling its speed as described in corresponding independent claim 6.

Further features and advantages of the invention are more apparent in the non-limiting description which follows of a non-exclusive embodiment of a tractor-trailer and of a method for controlling the speed of advance.

The description is set out below with reference to the accompanying drawings which are provided solely for purposes of illustration without restricting the scope of the invention and in which:

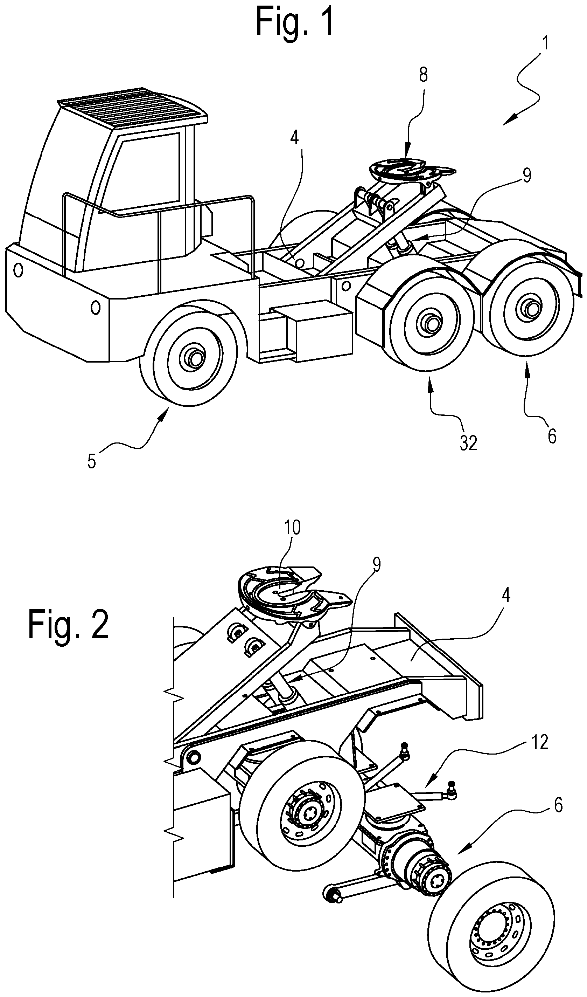

- Figure 1 is a schematic perspective view of a tractor unit of a tractor-trailer according to the invention;
- Figure 2 is an exploded detail of a part of the tractor unit of Figure 1;

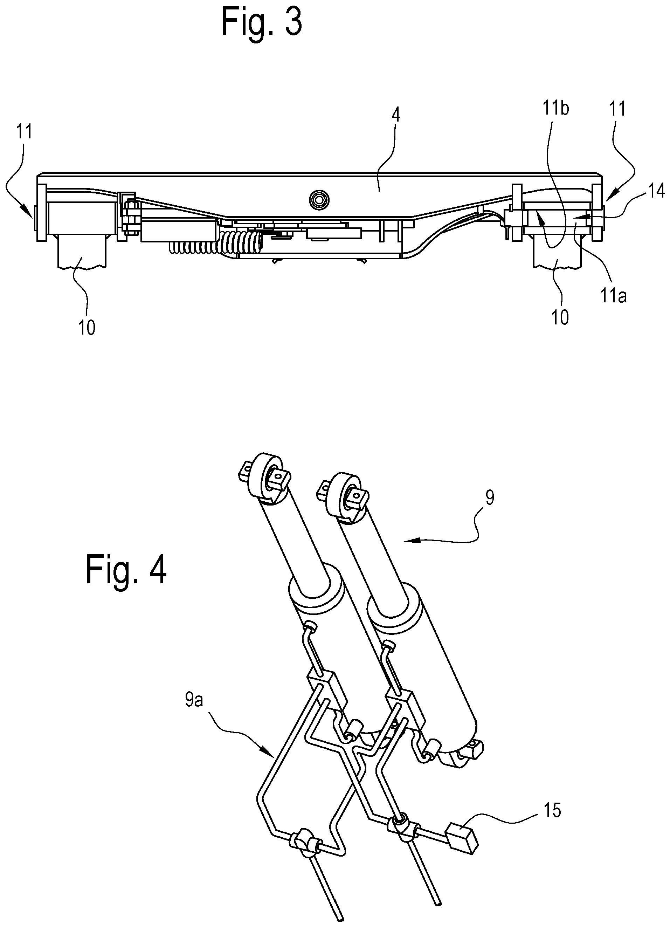

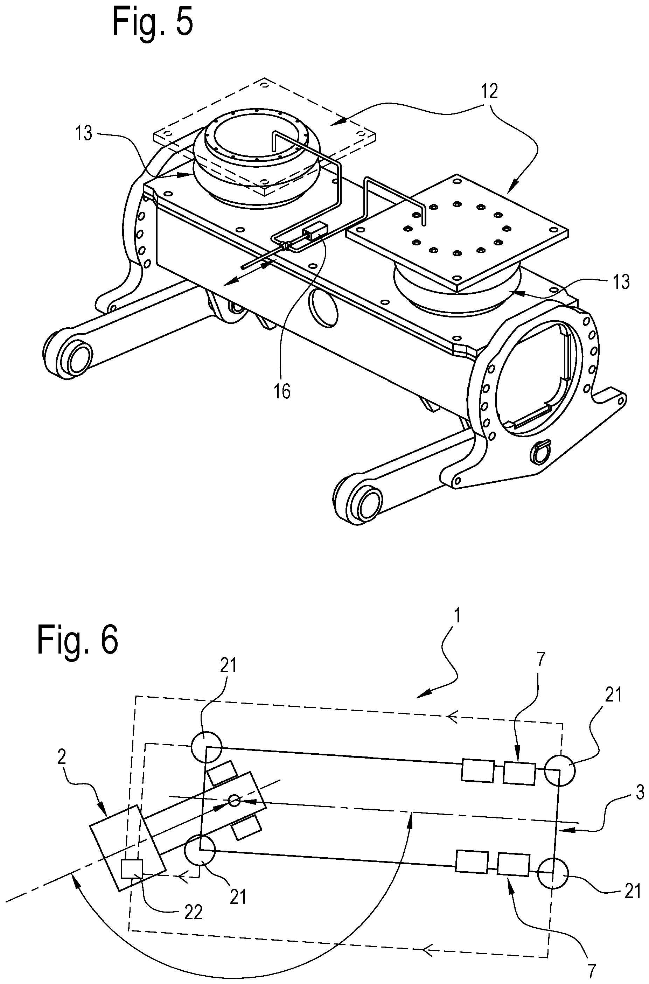

- Figures 3 to 5 illustrate respective details of the tractor unit of Figure 1 with some parts cut away to better illustrate others;
- Figure 6 is a schematic view of the tractor unit of Figure 1 with attached semitrailer;

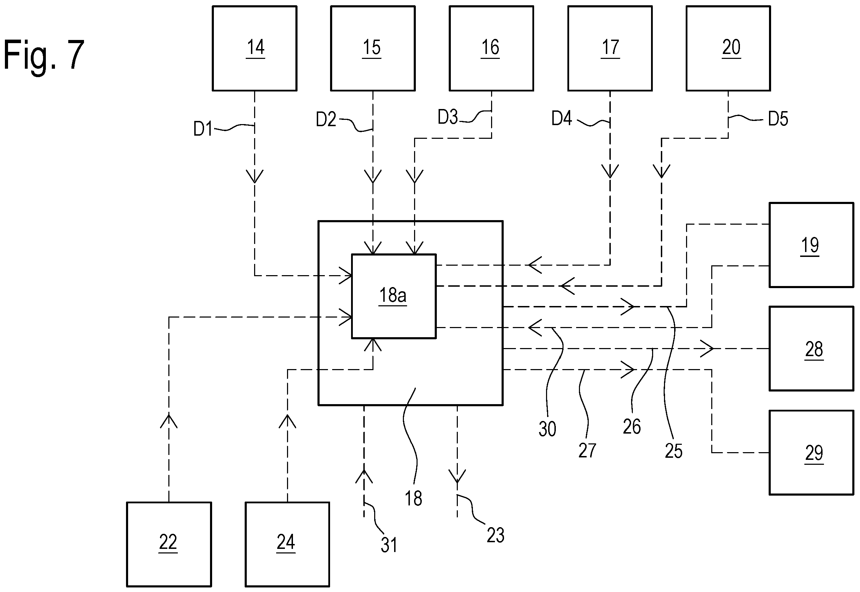

- Figure 7 is a block diagram of a method for controlling speed of advance of the tractor-trailer according to the invention.

The reference numeral 1 denotes a tractor-trailer according to the invention.

The tractor-trailer 1 comprises a tractor unit 2 and at least a semitrailer 3. The tractor unit 2 comprises a frame 4, at least a first pair of wheels 5 and a second pair of wheels 6.

The first pair of wheels 5 is front and the second pair of wheels 6 is rear. Preferably, the first pair of wheels 5 is a pair of steering idle wheels. Preferably, the second pair of wheels 6 is a pair of drive wheels. According to the embodiment illustrated, the tractor unit 2 comprises a third pair of wheels 32, preferably driving wheels.

The tractor unit 2 comprises a braking system 28 for the drive wheels 6, 32.

The semitrailer 3 comprises at least one pair of driven wheels 7. Optionally, the semitrailer 3 comprises a braking system 29 of the driven wheels 7.

The tractor unit 2 comprises a device 8 for attaching the semitrailer 3 and a system 9 for lifting the attachment device 8.

The lifting system 9 comprises a pressurised hydraulic circuit 9a.

The attachment device 8 comprises a rack 10 configured for connecting/disconnecting the semitrailer 3 to/from the tractor unit 2 and means 11 for connecting the rack 10 to a portion of frame 4 of the tractor unit 2.

Preferably, the connecting means 11 comprise pins 11a housed in respective seats 11b.

The tractor unit 2 comprises damper elements 12 positioned at the second pair of wheels 6 and a system 13 for lifting the damper elements 12.

The lifting system 13 comprises a pressurised hydraulic circuit.

The tractor-trailer 1 comprises a control unit 18 configured for receiving and processing data and for sending commands to operating means.

The control unit 18 is equipped with a processing unit 18a.

The control unit 18 is configured to receive data item 31 indicating the conditions of adherence of the tractor unit 2 to the ground.

The condition of adherence of the tractor unit 2 to the ground is determined by the conditions of the ground, for example dry or wet or with ice, and by the type of ground, for example asphalt or cement.

This data may be entered by the driver of the tractor-trailer 1 or sent to the control unit 18 by electronic units inside or outside the control unit 18.

According to the invention, the tractor unit 2 comprises a first sensor 14, positioned at the means 11 for connecting the rack 10 to the portion of frame 4 of the tractor unit 2, configured for detecting instantaneously a data item D1 indicating a pulling force of the semitrailer 3.

Preferably, the first sensor 14 is in the form of an extensometer pin.

The tractor unit 2 comprises a second sensor 15 configured to detect a data item D2 indicating a pressure of the lifting system 9 of the attachment device 8 of the semitrailer 3.

The tractor unit 2 comprises a third sensor 16 configured to detect a data item D3 indicating a pressure of the lifting system 13 of the damper elements 12.

According to the invention, the control unit 18a is configured to receive and process the data items D1, D2, D3 detected by the first sensor 14, by the second sensor 15 and by the third sensor 16 and to determine, on the basis at least of the data items D1, D2, D3, a indication relative to the load of the semitrailer 3 associated with each data item D1, D2, D3.

Advantageously, the processing unit 18a determines a redundant measurement referable to the load of the semitrailer 3.

If the indication relating to the load of the semitrailer 3 associated with the data item D2 of the second sensor 15 differs, according to a predetermined range of values, from the indication of the load associated with the data item D1 of the first sensor 14 and with the data item D3 of the third sensor 16, the control unit 18 is configured for generating a warning signal 23.

The difference between the load indication detected by the data items D1, D2, D3 of the first sensor 14, of the second sensor 15 and of the third sensor 16 indicates a non-uniform distribution of the loads in the semitrailer 3.

This may cause accidents when driving the tractor-trailer 1.

The warning signal 23 may be displayed by the driver of the tractor unit 2 using known display means, such as, for example, a monitor or a warning light.

The tractor unit 2 comprises a fourth sensor 17 configured for detecting a data item D4 indicating an angle of steering of at least one steering wheel 5 of the tractor unit 2.

Preferably, the fourth sensor 17 is in the form of an angular encoder. According to the invention, the speed of the processing unit 18a is configured to establish the speed of advance of the tractor-trailer 2 on the basis at least of the indication of the load of the semitrailer processed by the data items D1, D2, D3 detected by the first sensor 14, by the second sensor 15 and by the third sensor 16 and in combination with the data indicating an ambient condition of the ground on which the tractor unit 2 advances and the data item D4 indicating the steering angle.

The tractor unit 2 comprises a fifth sensor 20 configured for detecting a data item D5 indicating the inclination of the tractor unit 2 with respect to a horizontal direction taken as reference.

Preferably, the fifth sensor 20 is an inclinometer.

According to the invention, the speed of the processing unit 18a is configured to establish the speed of advance of the tractor-trailer 2 on the basis at least of the indication of the load of the semitrailer processed by the data items D1, D2, D3 detected by the first sensor 14, by the second sensor 15 and by the third sensor 16 and in combination with the data indicating an ambient condition of the ground on which the tractor unit 2 advances and the data item D4 indicating the steering angle and the data item D5 indicating the inclination of the tractor unit 2.

The control unit 18 is configured to receive data item 30 indicating the number of revolutions of a drive unit 19 of the tractor unit 2.

The drive unit 19 of the tractor unit 2 comprises electric or internal combustion or hybrid type motor means.

The control unit 18 is configured for receiving time data from a timer 24.

The control unit 18 is configured to receive further data indicating the weight of the tractor unit 2, coordinates of the centre of gravity of the tractor unit 2, geometrical dimensions of the rack 10, positioning of the rack 10 on the tractor unit 2, size of the semitrailer 3.

According to a preferred embodiment, the semitrailer 3 comprises four emitters 21, preferably with radio frequencies, each positioned at a respective vertex of the semitrailer 3.

The tractor unit 2 comprises a receiver 22 of the signals emitted by the emitters 21.

Each emitter 21 is configured for sending a respective signal characterised by a unique identifier.

The processing unit 18a is configured to receive and process the signals with respective identification data received from the receiver 22 and determine the relative angular position of the tractor unit 2 with respect to the semitrailer 3 instant by instant.

According to the invention, the speed of the processing unit 18a is configured to establish the speed of advance of the tractor-trailer 2 on the basis at least of the indication of the load of the semitrailer processed by the data items D1, D2, D3 detected by the first sensor 14, by the second sensor 15 and by the third sensor 16 and in combination with the data indicating an ambient condition of the ground on which the tractor unit 2 advances and the data item D4 indicating the steering angle and of the data item D5 indicating the inclination of the tractor unit 2 and the relative angular position of the tractor unit 2 with respect to the semitrailer 3. Advantageously, the processing unit 18a defines each time the maximum speed allowed for the tractor-trailer 1, as a function of the signals communicated by a multiplicity of sensors and as a function of ambient conditions which are made known to the control unit 18, or by the operator in the case of a vehicle with manual driving, or by the fleet management system/fleet manager in the case of an autonomous vehicle.

During use, the following conditions occur.

With the tractor-trailer 1 stationary, the processing unit 18a processes the data item D2 of the second sensor 15, obtained from the lifting means 9 of the attachment device 8, and the data item D3 of the third sensor 16, obtained from the lifting system 13 of the damper elements 12.

From the processing of data item D2 of the second sensor 15 and of data item D3 of the third sensor 16 the processing unit 18a obtains the respective loads of the semitrailer 3 and selects the highest estimated load calculated.

The processing unit 18a receives data coming from other sensors, such as the data item D5 indicating the inclination of the tractor unit 2 relative to a horizontal direction taken as reference.

The processing unit 18a establishes a reference speed of the tractor-trailer 1, with straight wheels, on the basis of the load of the semitrailer 3 and inclination of the tractor unit 2.

If the semitrailer 3 is braked, the processing unit 18a is configured for establishing the distribution of braking between the tractor unit and the semitrailer, on the basis of the combination of data acquired.

When the tractor-trailer 1 is started, the processing unit 18a receives instant by instant the data item D1 indicating a pulling force of the semitrailer 3.

It should be noted that the processing unit 18a clears the data item D1 of the effect of the acceleration of the tractor-trailer 1.

The acceleration of the tractor-trailer 1 is known instant by instant since the processing unit 18a receives the numbers of revolutions of the drive unit 19 and the data of the timer 24.

The processing unit 18a acquires instant by instant the data item D4 indicating a steering angle of at least one steering wheel 7 of the tractor unit 2.

Based on the data combination, the processing unit 18a determines a limitation of the speed of the moving of the tractor-trailer 1.

The limitation of the processing unit 18a takes into account any distribution of braking between the tractor unit 2 and the semitrailer 3.

On the basis of the reference speed established by the processing unit 18a, the control unit 18 is configured for communicating with an acceleration or a deceleration of the drive wheels 6, 32 of the tractor unit 2.

This acceleration or deceleration is controlled in a gradual fashion, without triggering sudden variations in speed which could trigger accidental phenomena such as "jackknifing".

For controlling the acceleration of the drive wheels 6, 32 of the tractor unit 2, the control unit 18 it is configured for sending a control signal 25 to the drive unit 19.

For controlling the deceleration of the drive wheels 5, 6 of the tractor unit 2, the control unit 18 is configured for sending a control signal 26 at least to the braking system 28 of the tractor unit 2.

If the semitrailer is braked, the control unit 18 is configured for sending a control signal 27 at least to the braking system 29 of the semitrailer 3.

## Claims

1. A tractor-trailer comprising a tractor unit (2) and at least a semitrailer (3) and a control unit (18) configured to receive at least one data item (31) indicating an ambient condition of the ground on which the tractor unit (2) advances;
the tractor unit (2) comprises at least a first pair of front wheels (5), preferably idle and steering wheels, and a second pair of rear wheels (6), preferably drive wheels, and a braking system (26) of at least one between the first pair of front wheels (5) and the second pair of rear wheels (6);
the semitrailer (3) comprises at least one pair of driven wheels (7);
the tractor unit (2) comprises a device (8) for attaching the semitrailer (3) and a system (13) for lifting the attachment device (8);
the attachment device (8) comprises a rack (10) configured for connecting/disconnecting the semitrailer (3) to/from the tractor unit (2) and
means (11) for connecting the rack (10) to a portion of frame (4) of the tractor unit (2);
the tractor unit (2) comprises damper elements (12) positioned at the second pair of rear wheels (6) and a system (13) for lifting the damper elements (12);
the tractor unit (2) comprises a first sensor (14), positioned at the means (11) for connecting the rack (10) to the portion of frame (4) of the tractor unit (2), configured for detecting a data item (D1) indicating a pulling force of the semitrailer (3) instant by instant;
the tractor unit (2) comprises a second sensor (15) configured to detect a data item (D2) indicating a pressure of the lifting system (9) of the attachment device (8);
the tractor unit (2) comprises a third sensor (16) configured to detect a data item (D3) indicating a pressure of the lifting system (13) of the damper elements (12);
the tractor unit (2) comprises a fourth sensor (17) configured for detecting a data item (D4) indicating an angle of steering of at least one wheel (5) of the tractor unit (2);
the control unit (18) comprises a processing unit (18a) configured to receive and process the data items (D1; D2; D3) detected by the first sensor (14), the second sensor (15) and the third sensor (16) and to determine, on the basis of the data items (D1; D2; D3), a relative indication of the load of the semitrailer (3);
the processing unit (18a) is configured to establish a reference speed of forward movement on the basis at least of the indication of a load of the semitrailer (3), data indicating an ambient condition of the ground on which the tractor unit (2) advances and data (D4) indicating the steering angle; on the basis of the reference speed established by the processing unit (18a), the control unit (18) is configured for commanding an acceleration or a deceleration at least of a pair of drive wheels (6, 32) of the tractor unit (2).

2. The tractor-trailer according to independent claim 1, wherein the tractor unit (2) comprises a fifth sensor (20) configured for detecting a data item (D5) indicating the inclination of the tractor unit (2) with respect to a horizontal direction; the processing unit (18a) is configured to establish the reference speed of forward movement on the basis of the data item (D5) indicating the inclination of the tractor unit (2) and the above-mentioned combination of data items.

3. The tractor-trailer according to claim 1 or 2, wherein it
comprises four radio frequency emitters (21), each located at a respective vertex of the semitrailer (3), and a receiver (22) of the signals emitted by the emitters (21); the processing unit (18a) is configured to receive and process the signals received from the receiver (22) and determine the relative angular position of the tractor unit (2) with respect to the semitrailer (3);
the processing unit (18a) is configured to establish the reference speed on the basis of the relative angular position of the tractor unit (2) with respect to the semitrailer (3) and the above-mentioned combination of data items.

4. The tractor-trailer according to any one of the preceding claims, wherein, if the semitrailer (3) comprises a system (29) for braking the driven wheels (7), the processing unit (18a) is configured to establish a distribution of braking between the braking system (28) of the tractor unit (2) and the braking system (29) of the semitrailer (3).

5. The tractor-trailer according to any one of the preceding claims, wherein the processing unit (18a) is configured to emit a warning signal (23) if the load indication detected with the data item (D2) of the second sensor (15) deviates according to a predetermined range of values from the load indication detected with the data items (D1; D3) of the first sensor (14) and of the third sensor (16).

6. A method for controlling the speed of advancement of a tractor-trailer (1) according to any one of claims 1 to 5, wherein, with the tractor-trailer (1) stationary, the processing unit (18a) processes the data item (D2) of the second sensor (15) and the data item (D3) of the third sensor (16) and, following this processing, obtains the respective loads of the semitrailer (3) selecting the highest value;
next, the processing unit (18a) establishes a reference speed of the tractor-trailer (1), with straight wheels, on the basis of the load of the selected semitrailer (3) and on the basis of the data item (D5) indicating the inclination of the tractor unit (2) with respect to a horizontal direction as a reference;
when the tractor-trailer (1) is started, the processing unit (18a) receives instant by instant the data item (D1) indicating a pulling force of the semitrailer (3) and the data item (D4) indicating an angle of steering of at least one steering wheel (5) of the tractor unit (2);
the processing unit (18a) establishes a reference speed of the tractor-trailer (1) on the basis of the combination of the data item (D1) indicating a pulling force of the semitrailer (3) of the data item (D4) indicating a steering angle of at least one steering wheel (5) of the tractor unit (2), and on the basis of the data item (D5) indicating the inclination of the tractor unit (2) with respect to a horizontal direction taken as reference;
on the basis of the reference speed established by the processing unit (18a), the control unit (18) is configured for communicating with an acceleration or a deceleration of the drive wheels (6, 32) of the tractor unit (2).

7. The method according to claim 6, wherein, if the semitrailer (3) comprises a system (29) for braking the driven wheels (7), the processing unit (18a) establishes the distribution of braking between the tractor unit (2) and the semitrailer (3) on the basis of the combination of data of the load of the semitrailer (3), calculated from the data items (D2, D3) of the second sensor (15) and of the third sensor (16), and on the basis of the data item (D5) indicating the inclination of the tractor unit (2) with respect to a horizontal direction taken as reference; the calculation of the reference speed of the processing unit (18a) takes into account the distribution of braking between the tractor unit (2) and the semitrailer (3).

## Patentansprüche

1. Sattelschlepper, umfassend eine Zugeinheit (2) und mindestens einen Sattelanhänger (3) sowie eine Steuereinheit (18), die ausgelegt ist, um mindestens einen Datenwert (31) zu empfangen, der eine Umgebungsbedingung des Bodens gibt, auf dem die Zugeinheit (2) fährt, angibt,
wobei die Zugeinheit (2) mindestens ein erstes Paar Vorderräder (5), bei denen es sich vorzugsweise um freilaufende und lenkende Räder handelt, und ein zweites Paar Hinterräder (6), bei denen es sich vorzugsweise um Antriebsräder handelt, sowie ein Bremssystem (26) für mindestens entweder das erste Paar Vorderräder (5) und/oder das zweite Paar Hinterräder (6) umfasst,
wobei der Sattelanhänger (3) mindestens ein Paar angetriebener Räder (7) umfasst,
wobei die Zugeinheit (2) eine Vorrichtung (8) zum Ankuppeln des Sattelanhängers (3) und ein System (13) zum Heben der Kupplungsvorrichtung (8) umfasst,
wobei die Kupplungsvorrichtung (8) ein Gestell (10) umfasst, das ausgelegt ist, um den Sattelanhänger (3) mit der Zugeinheit (2) zu verbinden/von dieser zu trennen, sowie Mittel (11), um das Gestell (10) mit einem Rahmenabschnitt (4) der Zugeinheit (2) zu verbinden, wobei die Zugeinheit (2) Dämpfungselemente (12) umfasst, die am zweiten Paar Hinterräder (6) positioniert sind, sowie ein System (13) zum Heben der Dämpfungselemente (12),
wobei die Zugeinheit (2) einen ersten Sensor (14) umfasst, der an den Mitteln (11) zum Verbinden des Gestells (10) mit dem Rahmenabschnitt (4) der Zugeinheit (2) positioniert und ausgelegt ist, um einen Datenwert (D1) zu erfassen, der Augenblick für Augenblick eine Zugkraft des Anhängers (3) angibt,
wobei die Zugeinheit (2) einen zweiten Sensor (15) umfasst, der ausgelegt ist, um einen Datenwert (D2) zu erfassen, der einen Druck des Hebesystems (9) der Kupplungsvorrichtung (8) angibt,
wobei die Zugeinheit (2) einen dritten Sensor (16) umfasst, der ausgelegt ist, um einen Datenwert (D3) zu erfassen, der einen Druck des Hebesystems (13) der Dämpfungselemente (12) angibt,
wobei die Zugeinheit (2) einen vierten Sensor (17) umfasst, der ausgelegt ist, um einen Datenwert (D4) zu erfassen, der einen Lenkeinschlagwinkel von mindestens einem Rad (5) der Zugeinheit (2) angibt,
wobei die Steuereinheit (18) eine Verarbeitungseinheit (18a) umfasst, die ausgelegt ist, um die vom ersten Sensor (14), dem zweiten Sensor (15) und dem dritten Sensor (16) erfassten Datenwerte (D1; D2; D3) zu empfangen und zu verarbeiten und auf der Grundlage der Datenwerte (D1; D2; D3) eine relative Angabe der Last des Sattelanhängers (3) zu ermitteln,
wobei die Verarbeitungseinheit (18a) ausgelegt ist, um eine Sollgeschwindigkeit der Vorwärtsbewegung auf der Grundlage von mindestens der Angabe einer Last des Sattelanhängers (3), von Daten, die eine Umgebungsbedingung des Bodens angeben, auf dem die Zugeinheit (2) fährt, und Daten (D4), die den Lenkeinschlagwinkel angeben, festzulegen,
wobei die Steuereinheit (18) auf der Grundlage der von der Verarbeitungseinheit (18a) festgelegten Sollgeschwindigkeit ausgelegt ist, um eine Beschleunigung oder ein Abbremsen von mindestens einem Paar von Antriebsrädern (6, 32) der Zugeinheit (2) zu steuern.

2. Sattelschlepper nach dem unabhängigen Anspruch 1, wobei die Zugeinheit (2) einen fünften Sensor (20) umfasst, der ausgelegt ist, um einen Datenwert (D5) zu erfassen, der die Neigung der Zugeinheit (2) in Bezug auf eine horizontale Richtung angibt, wobei die Verarbeitungseinheit (18a) ausgelegt ist, um eine Sollgeschwindigkeit der Vorwärtsbewegung auf der Grundlage des Datenwerts (D5), der die Neigung der Zugeinheit (2) angibt, und der oben genannten Kombination von Datenwerten festzulegen.

3. Sattelschlepper nach Anspruch 1 oder 2, wobei dieser vier Funkfrequenzsender (21) umfasst, die jeweils an einem jeweiligen Scheitel des Sattelanhängers (3) befindlich sind, und einen Empfänger (22) der von den Sendern (21) ausgesendeten Signale, wobei die Verarbeitungseinheit (18a) ausgelegt ist, um die vom Empfänger (22) empfangenen Signale zu empfangen und zu verarbeiten und die relative Winkelposition der Zugeinheit (2) in Bezug auf den Sattelanhänger (3) zu bestimmen,
wobei die Verarbeitungseinheit (18a) ausgelegt ist, um die Sollgeschwindigkeit auf der Grundlage der relativen Winkelposition der Zugeinheit (2) in Bezug auf den Sattelanhänger (3) und die oben genannte Kombination von Datenwerten festzulegen.

4. Sattelschlepper nach einem der vorhergehenden Ansprüche, wobei die Verarbeitungseinheit (18a), sofern der Sattelanhänger (3) ein System (29) zum Bremsen der angetriebenen Räder (7) umfasst, ausgelegt ist, um eine Bremsverteilung zwischen dem Bremssystem (28) der Zugeinheit (2) und dem Bremssystem (29) des Sattelanhängers (3) festzulegen.

5. Sattelschlepper nach einem der vorhergehenden Ansprüche, wobei die Verarbeitungseinheit (18a) ausgelegt ist, um ein Warnsignal (23) auszusenden, wenn die mit dem Datenwert (D2) des zweiten Sensors (15) erfasste Lastangabe nach einem vorgegebenen Wertebereich von der mit den Datenwerten (D1; D3) des ersten Sensors (14) und des dritten Sensors (16) erfassten Lastangabe abweicht.

6. Verfahren zur Steuerung der Fahrgeschwindigkeit eines Sattelschleppers (1) nach einem der Ansprüche 1 bis 5, wobei die Verarbeitungseinheit (18) bei stehendem Sattelschlepper (1) den Datenwert (D2) des zweiten Sensors (15) und den Datenwert (D3) des dritten Sensors (16) verarbeitet und nach dieser Verarbeitung die jeweiligen Lasten des Sattelanhängers (3) erhält und den höchsten Wert auswählt,
wobei die Verarbeitungseinheit (18a) danach eine Sollgeschwindigkeit des Sattelschleppers (1) bei gerade ausgerichteten Rädern auf der Grundlage der Last des ausgewählten Sattelanhängers (3) und auf der Grundlage des Datenwerts (D5), der die Neigung der Zugeinheit (2) in Bezug auf die horizontale Richtung als Referenzwert angibt, festlegt,
wobei die Verarbeitungseinheit (18a), wenn der Sattelschlepper (1) gestartet wird, Augenblick für Augenblick den Datenwert (D1) empfängt, der eine Zugkraft des Sattelanhängers (3) angibt, sowie den Datenwert (D4), der einen Lenkeinschlagwinkel von mindestens einem lenkenden Rad (5) der Zugeinheit (2) angibt,
wobei die Verarbeitungseinheit (18a) eine Sollgeschwindigkeit des Sattelschleppers (1) auf der Grundlage der Kombination des Datenwerts (D1), der eine Zugkraft des Sattelanhängers (3) angibt, des Datenwerts (D4), der einen Lenkeinschlagwinkel von mindestens einem lenkenden Rad (5) der Zugeinheit (2) angibt, und auf der Grundlage des Datenwerts (D5), der die Neigung der Zugeinheit (2) in Bezug auf eine horizontale Richtung, die als Referenzwert herangezogen wird, angibt, festlegt,
wobei die Steuereinheit (18) auf der Grundlage der von der Verarbeitungseinheit (18a) festgelegten Sollgeschwindigkeit ausgelegt ist, um mit einer Beschleunigung oder einem Abbremsen der Antriebsräder (6, 32) der Zugeinheit (2) zu kommunizieren.

7. Verfahren nach Anspruch 6, wobei die Verarbeitungseinheit (18a), wenn der Sattelanhänger (3) ein System (29) zum Bremsen der angetriebenen Räder (7) umfasst, die Bremsverteilung zwischen der Zugeinheit (2) und dem Sattelanhänger (3) auf der Grundlage der Kombination von Lastdaten des Sattelanhängers (3) festlegt, die anhand der Datenwerte (D2, D3) des zweiten Sensors (15) und des dritten Sensors (16) berechnet werden, und auf der Grundlage des Datenwerts (D5), der die Neigung der Zugeinheit (2) in Bezug auf eine horizontale Richtung, die als Referenzwert herangezogen wird, angibt, wobei die Berechnung der Sollgeschwindigkeit der Verarbeitungseinheit (18a) die Bremsverteilung zwischen der Zugeinheit (2) und dem Sattelanhänger (3) berücksichtigt.

## Revendications

1. Tracteur-remorque, comprenant une unité de tracteur (2) et au moins une semi-remorque (3) et une unité de commande (18) configurée pour recevoir au moins un élément de données (31) indiquant une condition ambiante du sol sur lequel l'unité de tracteur (2) avance ; l'unité de tracteur (2) comprend au moins une première paire de roues avant (5), de préférence des roues directrices et folles, et une deuxième paire de roues arrière (6), de préférence des roues motrices, et un système de freinage (26) d'au moins une paire entre la première paire de roues avant (5) et la deuxième paire de roues arrière (6) ;
la semi-remorque (3) comprend au moins une paire de roues menées (7) ;
l'unité de tracteur (2) comprend un dispositif (8) d'accrochage de la semi-remorque (3) et un système (13) pour soulever le dispositif d'accrochage (8) ;
le dispositif d'accrochage (8) comprend une crémaillère (10) configurée pour raccorder/séparer la semi-remorque (3) à/de l'unité de tracteur (2) et des moyens (11) pour raccorder la crémaillère (10) à une partie du châssis (4) de l'unité de tracteur (2) ;
l'unité de tracteur (2) comprend des éléments amortisseurs (12) positionnés en correspondance de la deuxième paire de roues arrière (6) et un système (13) pour soulever les éléments amortisseurs (12) ;
l'unité de tracteur (2) comprend un premier capteur (14), positionné en correspondance des moyens (11) de raccordement de la crémaillère (10) à la partie du châssis (4) de l'unité de tracteur (2), configuré pour détecter un élément de données (D1) indiquant une force de traction de la semi-remorque (3) instant par instant ; l'unité de tracteur (2) comprend un deuxième capteur (15) configuré pour détecter un élément de données (D2) indiquant une pression du système de levage (9) du dispositif d'accrochage (8) ;
l'unité de tracteur (2) comprend un troisième capteur (16) configuré pour détecter un élément de données (D3) indiquant une pression du système de levage (13) des éléments amortisseurs (12) ;
l'unité de tracteur (2) comprend un quatrième capteur (17) configuré pour détecter un élément de données (D4) indiquant un angle de braquage d'au moins une roue (5) de l'unité de tracteur (2) ;
l'unité de commande (18) comprend une unité de traitement (18a) configurée pour recevoir et traiter les éléments de données (D1 ; D2 ; D3) détectés par le premier capteur (14), le deuxième capteur (15) et le troisième capteur (16) et pour déterminer, sur la base des éléments de données (D1 ; D2 ; D3), une indication relative de la charge de la semi-remorque (3) ;
l'unité de traitement (18a) est configurée pour établir une vitesse de référence de déplacement vers l'avant sur la base au moins de l'indication d'une charge de la semi-remorque (3), des données indiquant une condition ambiante du sol sur lequel l'unité de tracteur (2) avance et des données (D4) indiquant l'angle de braquage ;
sur la base de la vitesse de référence établie par l'unité de traitement (18a), l'unité de commande (18) est configurée pour commander une accélération ou une décélération au moins d'une paire de roues motrices (6, 32) de l'unité de tracteur (2).

2. Tracteur-remorque selon la revendication indépendante 1, dans lequel l'unité de tracteur (2) comprend un cinquième capteur (20) configuré pour détecter un élément de données (D5) indiquant l'inclinaison de l'unité de tracteur (2) par rapport à une direction horizontale ; l'unité de traitement (18a) est configurée pour établir la vitesse de référence du déplacement vers l'avant sur la base de l'élément de données (D5) indiquant l'inclinaison de l'unité de tracteur (2) et de la combinaison susmentionnée des éléments de données.

3. Tracteur-remorque selon la revendication 1 ou 2, dans lequel il comprend quatre émetteurs de radiofréquence (21), chacun situé à un sommet respectif de la semi-remorque (3), et un récepteur (22) des signaux émis par les émetteurs (21) ; l'unité de traitement (18a) est configurée pour recevoir et traiter les signaux reçus du récepteur (22) et déterminer la position angulaire relative de l'unité de tracteur (2) par rapport à la semi-remorque (3) ;
l'unité de traitement (18a) est configurée pour établir la vitesse de référence sur la base de la position angulaire relative de l'unité de tracteur (2) par rapport à la semi-remorque (3) et de la combinaison susmentionnée des éléments de données.

4. Tracteur-remorque selon l'une quelconque des revendications précédentes, dans lequel, si la semi-remorque (3) comprend un système (29) de freinage des roues menées (7), l'unité de traitement (18a) est configurée pour établir une répartition du freinage entre le système de freinage (28) de l'unité de tracteur (2) et le système de freinage (29) de la semi-remorque (3) .

5. Tracteur-remorque selon l'une quelconque des revendications précédentes, dans lequel l'unité de traitement (18a) est configurée pour émettre un signal d'avertissement (23) si l'indication de charge détectée avec l'élément de données (D2) du deuxième capteur (15) s'écarte selon une plage de valeurs prédéterminée de l'indication de charge détectée avec les éléments de données (D1 ; D3) du premier capteur (14) et du troisième capteur (16).

6. Procédé de commande de la vitesse d'avancement d'un tracteur-remorque (1) selon l'une quelconque des revendications 1 à 5, dans lequel, le tracteur-remorque (1) étant à l'arrêt, l'unité de traitement (18a) traite l'élément de données (D2) du deuxième capteur (15) et l'élément de données (D3) du troisième capteur (16) et, à la suite de ce traitement, obtient les charges respectives de la semi-remorque (3) en sélectionnant la valeur la plus élevée ;
puis, l'unité de traitement (18a) établit une vitesse de référence du tracteur-remorque (1), avec des roues droites, sur la base de la charge de la semi-remorque sélectionnée (3) et sur la base de l'élément de données (D5) indiquant l'inclinaison de l'unité de tracteur (2) par rapport à une direction horizontale comme référence ;
lorsque le tracteur-remorque (1) est démarré, l'unité de traitement (18a) reçoit instant par instant l'élément de données (D1) indiquant une force de traction de la semi-remorque (3) et l'élément de données (D4) indiquant un angle de braquage d'au moins une roue directrice (5) de l'unité de tracteur (2) ;
l'unité de traitement (18a) établit une vitesse de référence du tracteur-remorque (1) sur la base de la combinaison de l'élément de données (D1) indiquant une force de traction de la semi-remorque (3) de l'élément de données (D4) indiquant un angle de braquage d'au moins une roue directrice (5) de l'unité de tracteur (2), et sur la base de l'élément de données (D5) indiquant l'inclinaison de l'unité de tracteur (2) par rapport à une direction horizontale prise comme référence ;
sur la base de la vitesse de référence établie par l'unité de traitement (18a), l'unité de commande (18) est configurée pour communiquer avec une accélération ou une décélération des roues motrices (6, 32) de l'unité de tracteur (2).

7. Procédé selon la revendication 6, dans lequel, si la semi-remorque (3) comprend un système (29) de freinage des roues menées (7), l'unité de traitement (18a) établit la répartition du freinage entre l'unité de tracteur (2) et la semi-remorque (3) sur la base de la combinaison des données de la charge de la semi-remorque (3), calculée à partir des éléments de données (D2, D3) du deuxième capteur (15) et du troisième capteur (16), et sur la base de l'élément de données (D5) indiquant l'inclinaison de l'unité de tracteur (2) par rapport à une direction horizontale prise comme référence ; le calcul de la vitesse de référence de l'unité de traitement (18a) tient compte de la répartition du freinage entre l'unité de tracteur (2) et la semi-remorque (3).
